# EUROPEAN PATENT APPLICATION

(11) **EP 4 524 476 A1**
(43) Date of publication of application: **19.03.2025**
(21) Application number: 23197152.4
(22) Date of filing: 13.09.2023
(51) Int. Cl.: F24C 7/08, A47J 31/40, B64D 11/04, A47J 31/00

(54) **AIRCRAFT COOKING DEVICE**

(71) Applicant: B/E Aerospace, Inc., Winston Salem, NC 27105 (US)
(72) Inventor: PEREZ CAMACHO, Manuel, 3431BH Nieuwegein (NL)
(74) Representative: Dehns

(57) **Abstract**

A system (10) for preparing a consumable on an aircraft is provided. The system includes an aircraft galley interface (120) having a water outlet (121) and a power outlet (122); and an aircraft cooking device (100) having a water inlet (111) connected to the water outlet (121) of the aircraft galley interface (120) and a power inlet (112) connected to the power outlet (122) of the aircraft galley interface (120), wherein the aircraft cooking device further includes at least one removable receptacle (101) that is configured to receive a consumable, wherein, when the removable receptacle (101) is placed in a housing (100a) of the aircraft cooking device, the aircraft cooking device (100) is configured to introduce water into the receptacle (101), via the water inlet (111), to prepare the consumable for consumption.

## Description

### FIELD

The present disclosure relates to an aircraft cooking device.

### BACKGROUND

In aircraft, meals are usually prepared using special cooking facilities (e.g. galley ovens and the like). In some circumstances, aircraft galley ovens are used to heat packaged meals. However, packaged meals heated in an oven can sometimes have an inadequate taste and/or may not heat the packaged meal to a desired uniform temperature to ensure that the consistency of the food is as desired. There is a need for improved cooking devices.

### SUMMARY

A system for preparing a consumable on an aircraft is provided. The system includes an aircraft galley interface having a water outlet and a power outlet. The system further includes an aircraft cooking device having a water inlet connected to the water outlet of the aircraft galley interface and a power inlet connected to the power outlet of the aircraft galley interface, wherein the aircraft cooking device further includes at least one removable receptacle that is configured to receive a consumable, wherein, when the removable receptacle is placed in a housing of the aircraft cooking device, the aircraft cooking device is configured to introduce water into the receptacle, via the water inlet, to prepare the consumable for consumption.

A releasing mechanism may be provided in or on the housing or receptacle that is configured to, in use, remove the receptacle from the housing. The releasing mechanism may be a handle, or the releasing mechanism may be a door such that the user can open the door and remove the receptacle. Preferably, the door may have a transparent portion or a window.

The aircraft cooking device may include a water heater to heat the water that is to be provided into the receptacle to a threshold temperature.

The aircraft cooking device may include a heating module that is configured to heat and/or warm the receptacle and/or wherein the heating module is configured to heat and/or warm the consumable inside the receptacle.

The aircraft cooking device may include a valve that is configured to control the amount of water provided into the receptacle.

The aircraft cooking device may include one or more sensors that are configured to measure one or more of the weight of the consumable and/or receptacle, the humidity of the consumable and/or receptacle, the temperature of the consumable and/or receptacle, the pressure of the consumable and/or receptacle, the level of the consumable, the proximity of the receptacle and/or the amount of water provided in the receptacle.

The aircraft cooking device may include a control module.

The aircraft cooking device may include a stirrer.

The aircraft cooking device may include a Human-Machine Interface, HMI, module.

The consumable may be one of rice, oatmeal, quinoa, farro, polenta, risotto, or other grains and the like; and/or the consumable may be one of instant soup, porridge, powdered food/drink, or the like; and/or the consumable may be one of ready-made soups, consommé, creams, chocolate, or the like.

An aircraft may also be provided that includes the system as described above.

A method of using the system described above is also provided. The method includes providing a consumable into the receptacle and placing the receptacle into the housing of the aircraft cooking device.

### BRIEF DESCRIPTION OF THE DRAWINGS

Fig. 1 shows an example of an aircraft system that includes an aircraft cooking device.
Fig. 2 shows an example of a method of using the system of Fig. 1.

### DETAILED DESCRIPTION

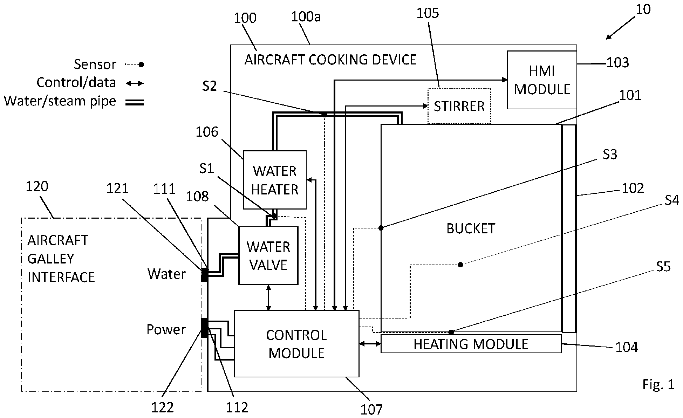

Generally, in Fig. 1, there is shown a system 10 for an aircraft. The system 10 includes an aircraft cooking device 100 and an aircraft galley interface 120. As discussed below, it is envisaged that the aircraft cooking device 100 is connected to the aircraft galley interface 120 to perform its functions.

The aircraft cooking device 100 will now be discussed in more detail with reference to Fig. 1. The aircraft cooking device 100 is suitable for cooking a variety of consumables (e.g. foods and/or drinks) that need to be prepared with water and/or steam. For example, the aircraft cooking device 100 may be suitable for, but not restricted to, rice, oatmeal, quinoa, farro, polenta, risotto, or other grains and the like. The aircraft cooking device 100 may also, or alternatively, be suitable for, but not restricted to, instant soups, porridges, powdered foods/drinks, or the like. Further, the aircraft cooking device 100 could be used to steam fish, meat, vegetables, or the like.

As shown in Fig. 1, the aircraft cooking device 100 may include a housing 100a. A removable receptacle 101 is provided within the housing 100a. The receptacle 101 is configured to be removed from the housing 100a by the user so as to receive any suitable consumable that is required to be cooked (e.g. rice, grains, powder, as discussed above). A releasing mechanism 102 may be provided in or on the housing 100a or receptacle 101 to assist the user in removing the receptacle 101. For example, the releasing mechanism 102 could be a handle to remove the receptacle 101, or the releasing mechanism 102 could be a door such that the user can open the door and remove the receptacle 101. In the case where the releasing mechanism 102 is a door, the door may have a transparent portion or a window such that the user can observe the cooking process to check the cooking status of the consumable etc. The releasing mechanism 102 may also include a locking feature (not shown) to ensure that the receptacle 101 is locked in place, e.g. whilst in use, or during aircraft taxiing, take-off or landing. Although only one receptacle 101 is shown in Fig. 1, it is to be understood that the aircraft cooking device 100 may include more than one receptacle 101 to cook various different consumables at the same time. The receptacle 101 may include a non-stick coating.

The aircraft cooking device 100 may include a Human-Machine Interface (hereinafter "HMI") module 103 may also be provided in or on the housing 100a of the aircraft cooking device 100. The HMI module 103 may, as an example, be configured to allow the user to input to the aircraft cooking device 100 the type of food that has been placed in the receptacle 101, the temperature at which the consumable is to be cooked, the time that the consumable requires to be cooked, the desired recipe etc. In this instance, the term 'recipe' means the cooking program which defines the desired sequence of activation of the modules, timing, receptacle temperature, water temperature, water amount, activating/deactivating the stir, etc.

As shown in Fig. 1, the aircraft cooking device 100 may include a heating module 104 in the housing 100a. The heating module 104 is envisaged to be proximate to, or in contact with, the receptacle 101 to ensure that the consumable within the receptacle 101 is heated and/or warmed. For example, the heating module 104 could be used to heat and/or warm consumables such as ready-made soups, consommé, creams, chocolate etc. The heating module 104 may include a weight sensor and/or a temperature sensor to determine the weight of the consumable within the receptacle 101 and/or the temperature of the consumables within the receptacle 101.

Optionally, a stirrer 105 may be included in the system 10. The stirrer 105 may be integral in the housing 100a and may be configured to be introduced into the receptacle 101 to stir the consumable provided within the receptacle 101. Alternatively, and again optionally, the stirrer 105 may be integral to the receptacle 101 in order to stir the consumable provided in the receptacle 101. The stirrer 105 may be a paddle, slatted spoon or the like.

As shown in Fig. 1, a water heater 106 may be included in the housing 100a of the aircraft cooking device 100. The water heater 106 is configured to receive water (e.g. via a water inlet 111 provided in the aircraft cooking device 100) from a water outlet 121 of an aircraft galley interface 121. The receptacle 101 may include a water inlet (not shown) to intake water that has been heated from the water heater 106. Of course, depending on the selected recipe, the water provided may not be heated by the water heater 106. For example, instant soup would require an intake of hot water whereas the process of cooking eggs would require cold water at the beginning of the cooking process. These are merely included for example only and are not limiting to the scope of this disclosure. The water provided in the receptacle 101 may be heated to a threshold temperature range for the particular consumable that is provided in the receptacle 101. It is also envisaged that the heating module 104 may be used in combination with the water heater 106 to cook, boil or steam consumables.

A control module 107 may be included in the aircraft cooking device 100 to control the various components of the aircraft cooking device 100. As an example, at least one of the water heater 106, the heating module 104, the HMI module 103, the stirrer 105 and/or the releasing mechanism 102 may be connected to the control module 107 for automation of the aircraft cooking device 100. As shown in Fig. 1, the control module 107 is connected to a power inlet 112 of the aircraft cooking device 100. The power inlet 112 of the aircraft cooking device 100 is connected to a power outlet 122 of the aircraft galley interface 120 in order to provide power to the control module 107. In use, the control module 107 can receive instructions from the HMI module 103 (e.g. the type of consumable provided in the receptacle 101 and/or the selected recipe) to automatically cook/heat the consumable in the receptacle 101. For example, the control module 107 can provide instructions to the water heater 106 to heat the water to a certain temperature for the particular consumable provided in the receptacle 101. The control module can also provide instructions to the heating module 104 to heat the receptacle 101 to a certain temperature to heat and/or warm the consumable provided in the receptacle 101. If a stirrer 105 is provided, the control module 107 can also provide instructions to the stirrer 105 to stir the consumable provided in the receptacle 101. A valve 108 may also be provided upstream of the water inlet of the receptacle 101 and the valve 108 may also be controlled by the control module 107 to provide the desired amount of water to the receptacle 101 to cook the consumable provided in the receptacle 101. The valve 108, in turn, may also control the amount of water provided to the water heater 106. As shown in Fig 1, the water valve 108 is provided between the water heater 106 and the water inlet 111 of the aircraft cooking device 100. However, it is also possible that the water valve 108 may be situated between the water heater 106 and the receptacle 101. The control module 107 may also update the HMI module 103 to inform the user of the remaining time left for cooking, the temperature that the receptacle is at etc. The control module 107 may also control the actuation of the valve 108, water heater 106, the stirrer 105 and/or the heating module 104 in a timely manner according to the selected recipe.

Various sensors S1-S5 may also be provided in the aircraft cooking device 100. The various sensors S1-S5 are connected to the control module 107 to ensure an efficient, controlled and automated cooking process. As shown in Fig 1., a first sensor S1 may be provided between the water inlet 111 of the aircraft cooking device 100 and the water heater 106 to measure the flow, temperature etc. of the water entering the water heater 106. As shown in Fig. 1, the sensor S1 may be located between the water valve 108 and the water heater 106. A second sensor S2 may be provided between the water heater 106 and the receptacle 101 to ensure that the water provided from the water heater 106 to the receptacle 101 is at the correct temperature and/or is the correct amount of water. It is to be understood that the water provided by the water heater 106 could be cold water, hot water and/or steam. A third sensor S3 may be provided proximate to one side of the receptacle 101. The third sensor S3 may be one or more of a proximity, pressure, humidity and/or temperature sensor to measure the proximity, pressure, humidity and/or temperature of the receptacle 101. A fourth sensor S4 may be located within the receptacle 101. This sensor may be one or more of a level, humidity and/or temperature sensor to measure the level, humidity and/or temperature of the consumable within the receptacle 101.A fifth sensor S5may be provided at the bottom of the receptacle 101. This sensor may be one or more of a weight, pressure and/or temperature sensor to measure the weight, pressure and/or temperature of the receptacle 101.

Together, the sensors S1-S5 will provide feedback information to the control module 107 to automate the cooking process of the aircraft cooking device 100 that ensures that the consumable provided in the receptacle 101 is cooking at a desired temperature, for a desired length of time, to an optimal consistency and to ensure that the consumable is not under- and/or over-cooked. The control module 107 may also control the actuation of the valve 108, water heater 106, the stirrer 105 and/or the heating module 104 in a timely manner according to the feedback from the various sensors S1-S5.

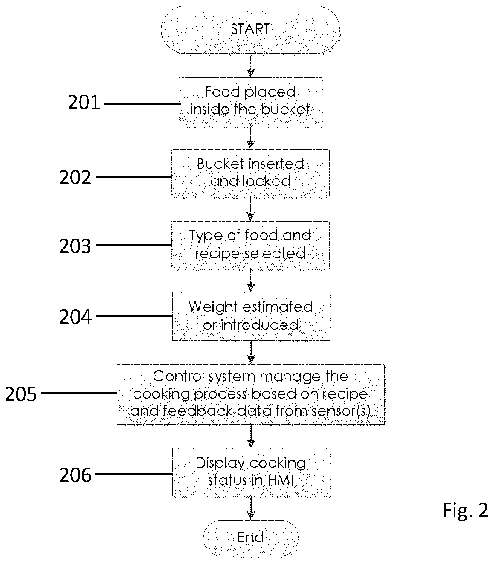

A method of using the system 10 of Fig. 1 is now described in conjunction with Fig. 2. It is to be understood that in the following examples, the aircraft cooking device 100, if modular, has been inserted into a space in the aircraft galley and connected to the aircraft galley interface 120. In step 201, the user may release and remove the receptacle 101 by using the releasing mechanism 102. A consumable is then placed within the receptacle 101. As discussed above, the consumable may be, but not restricted to, rice, oatmeal, quinoa, farro, polenta, risotto, or other grains and the like. The consumable may also, or alternatively, be instant soups, porridges, powdered foods/drinks, or the like. At step 202, the user re-inserts the receptacle 101 into the housing 100a of the aircraft cooking device 100. The releasing mechanism 102 may be adjusted to maintain the receptacle 101 in a locked mode. At step 203, the user may input parameters (e.g. temperature, time, type of consumable, desired recipe etc.) through the HMI module 103 to indicate to the control module 107 the parameters that need to be controlled. At step 204, the weight of the consumable may be provided in the HMI module 103, or may automatically be sensed by the aircraft cooking device 100 so that the control module 107 can utilise the amount of consumable provided in the receptacle 101 to control temperature, amount of water, cooking time etc for cooking and/or heating the consumable. Based on the parameters input in steps 203 and/or 204, the method, at step 205, controls the cooking process via control module 107. Optionally, at step 206, the control module 107 may provide updates to the HMI module 103 to display the status of the cooking process. For example, the HMI module 103 can display the time remaining, temperature within the receptacle 101 etc. Once the cooking process has finished, the user may remove the receptacle 101 from the aircraft cooking device 100 to serve the consumable to the passengers and/or crew. Alternatively, after finishing the cooking process, the aircraft cooking device 100 can sense and keep the consumable at a certain temperature and/or humidity until the receptacle 101 is removed by the user. If any consumable is remaining in the receptacle 101, the user may activate a "warming function" where the aircraft cooking device 100 maintains the consumable at a certain temperature and/or humidity via the heating module 104.

Generally, ovens are not always the best approach for cooking some specific foods or when a more elaborated fresh meal is desired. The proposed aircraft cooking device and methods described above improves performance and taste, brings new functionalities, and provides a more automated way of cooking consumables on an aircraft.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A system (10) for preparing a consumable on an aircraft, the system comprising:
an aircraft galley interface (120) having a water outlet (121) and a power outlet (122);
an aircraft cooking device (100) having a water inlet (111) connected to the water outlet (121) of the aircraft galley interface (120) and a power inlet (112) connected to the power outlet (122) of the aircraft galley interface (120), wherein the aircraft cooking device further includes at least one removable receptacle (101) that is configured to receive a consumable, wherein, when the removable receptacle (101) is placed in a housing (100a) of the aircraft cooking device, the aircraft cooking device (100) is configured to introduce water into the receptacle (101), via the water inlet (111), to prepare the consumable for consumption.

2. The system of claim 1, wherein a releasing mechanism (102) is provided in or on the housing (100a) or receptacle (101) that is configured to, in use, remove the receptacle (101) from the housing.

3. The system of claim 2, wherein the releasing mechanism (102) is a handle, or wherein the releasing mechanism (102) is a door such that the user can open the door and remove the receptacle (101), and preferably wherein the door has a transparent portion or a window.

4. The system of any preceding claim, wherein the aircraft cooking device (100) includes a water heater (106) to heat the water that is to be provided into the receptacle (101) to a threshold temperature.

5. The system of any preceding claim, wherein the aircraft cooking device (100) includes a heating module (104) configured to heat and/or warm the receptacle (101) and/or wherein the heating module (104) is configured to heat and/or warm the consumable inside the receptacle (101).

6. The system of any preceding claim, wherein the aircraft cooking device (101) includes a valve (108) that is configured to control the amount of water provided into the receptacle (101).

7. The system of any preceding claim, wherein the aircraft cooking device (100) includes one or more sensors (S1-S5) that are configured to measure one or more of the weight of the consumable and/or receptacle (101), the humidity of the consumable and/or receptacle (101), the temperature of the consumable and/or receptacle (101), the pressure of the consumable and/or receptacle (101), the level of the consumable, the proximity of the receptacle (101) and/or the amount of water provided in the receptacle (101).

8. The system of any preceding claim, wherein the aircraft cooking device (100) includes a control module (107).

9. The system of any preceding claim, wherein the aircraft cooking device (100) includes a stirrer (105).

10. The system of any preceding claim, wherein the aircraft cooking device (100) includes a Human-Machine Interface, HMI, module (103).

11. The system of any preceding claim, wherein the consumable is one of rice, oatmeal, quinoa, farro, polenta, risotto, or other grains and the like; and/or
wherein the consumable is one of instant soup, porridge, powdered food/drink, or the like; and/or
wherein the consumable is one of ready-made soups, consommé, creams, chocolate, or the like.

12. An aircraft including the system as claimed in any preceding claim.

13. A method of using the system as claimed in claim 1, the method including:
providing a consumable into the receptacle (101);
placing the receptacle into the housing (100a) of the aircraft cooking device (100).

14. The method of claim 13, when dependent on claim 7, wherein the method further includes:
measuring and/or estimating one or more of the weight, humidity, temperature, pressure, level, proximity and/or the amount of water via the sensors (S1-S5) for preparing the consumable for consumption.

15. The method of claim 13 or 14, when dependent on claim 10, wherein the method further includes:
selecting one or more of temperature, time, type of consumable and/or desired recipe, via the HMI module (103) for preparing the consumable for consumption.
